# EUROPÄISCHE PATENTSCHRIFT

(11) **EP 1 102 964 B1**
(45) Veröffentlichungstag und Bekanntmachung des Hinweises auf die Patenterteilung: **08.10.2003**
(21) Anmeldenummer: 99938315.1
(22) Anmeldetag: 22.07.1999
(51) Int. Cl.: G01D 5/347

(54) **VERFAHREN ZUR MONTAGE EINER POSITIONSMESSEINRICHTUNG UND POSITIONIERMITTEL ZUR MONTAGE**
METHOD FOR ASSEMBLING A POSITION MEASURING DEVICE AND A POSITIONING MEANS FOR THE ASSEMBLY
PROCEDE ET MOYEN DE POSITIONNEMENT POUR LE MONTAGE D'UN SYSTEME DE MESURE DE POSITION

(30) Priorität: 08.08.1998 DE 19836003
(43) Veröffentlichungstag der Anmeldung: 30.05.2001
(73) Patentinhaber: Dr. Johannes Heidenhain GmbH, 83292 Traunreut (DE)
(72) Erfinder: SCHROTER, Andreas, D-83278 Traunstein (DE); RÖDER, Horst, D-83301 Traunreut (DE)
(86) Internationale Anmeldenummer: EP9905223
(87) Internationale Veröffentlichungsnummer: WO00008418

(56) Entgegenhaltungen:
- DE-A- 3 740 744
- DE-U- 9 417 467

## Beschreibung

Die Erfindung betrifft ein Verfahren zur Montage einer Positionsmeßeinrichtung gemäß dem Oberbegriff des Patentanspruches 1 und ein Positioniermittel zur Montage gemäß dem Oberbegriff des Patentanspruches 9.

Bei Positionsmeßeinrichtungen wird eine Maßverkörperung von einem Abtastelement abgetastet. Bei dieser Abtastung werden postionsabhängige elektrische Abtastsignale gewonnen, die einer Folgeelektronik, beispielsweise einem Zähler oder einer numerischen Steuerung zugeführt werden. Die Qualität der Abtastsignale ist abhängig vom Abtastabstand, weshalb es erforderlich ist, das Abtastelement in einem genau definierten Abstand relativ zur Maßverkörperung zu montieren.

In der EP 0 177 711 B1 ist eine Positionsmeßeinrichtung beschrieben, bei der ein Abtastelement in Form einer Abtastteilung in einer Führung zur Einstellung des Abtastabstandes verschiebbar gelagert ist und in jeder Stellung arretierbar ist. Der erforderliche Abtastabstand wird durch eine Abstandsfolie vorgegeben, die während der Montage zwischen Maßverkörperung und Abtastteilung eingefügt wird. Die Verschiebung der Abtastteilung erfolgt bis zur Klemmung der Folie, danach wird die Abtastteilung arretiert und die Folie entfernt.

Nachteilig bei dieser bekannten Positionsmeßeinrichtung ist die Notwendigkeit einer separaten Folie als Abstandshalter sowie das seitliche Entfernen einer geklemmten Folie.

In der EP 0 280 390 A1 ist eine Positionsmeßeinrichtung in Form eines Drehgebers bekannt, der keine eigene Lagerung aufweist. Derartige Drehgeber werden als Einbaudrehgeber bezeichnet. Die Relativlage von Abtasteinheit und Teilscheibe ist bei Einbaudrehgebern erst im angebauten Zustand an die zu messenden Objekte festgelegt. Zur Vereinfachung des Anbaus ist im Drehgeber ein Fixierelement integriert, das mit der Nabe der Teilscheibe in Kontakt steht und während des Anbaus die Position der Teilscheibe festlegt. Nach erfolgter Montage der Teilscheibe an das eine zu messende Objekt und der Abtasteinheit an das andere zu messende Objekt wird das Fixierelement von der Nabe entfernt.

Aus der EP 0 841 539 A1 ist eine Positionsmeßeinrichtung bekannt, bei der ein Abtastelement an einem Träger von einer ersten Bezugsposition in eine zweite Bezugsposition verschiebbar gelagert ist. Zur Verschiebung ist im Träger ein Positioniermittel integriert, mit dem das Abtastelement nach der Montage des Trägers an einem zu messenden Objekt von der ersten in die zweite Bezugsposition bewegt wird.

Dieses Verfahren hat den Nachteil, daß in jeder Positionsmeßeinrichtung ein Positioniermittel integriert sein muß, und das Abtastelement am Träger bewegbar gelagert sein muß.

Der Erfindung liegt daher die Aufgabe zugrunde, ein Verfahren anzugeben, mit dem eine einfache Montage und Justierung eines Abtastelementes gegenüber einer Maßverkörperung gewährleistet ist.

Diese Aufgabe wird durch das Verfahren gemäß dem Patentanspruch 1 gelöst.

Weiterhin soll ein Positioniermittel angegeben werden, mit dem der erforderliche Abtastabstand bei der Montage einfach einstellbar ist.

Diese Aufgabe wird durch das Positioniermittel mit den Merkmalen des Patentanspruches 9 gelöst.

Die Vorteile der Erfindung liegen insbesondere darin, daß der Abtastabstand durch ein Positioniermittel eingestellt werden kann, das für eine Vielzahl von Positionsmeßeinrichtungen einsetzbar ist. Die Positionsmeßeinrichtung selbst kann einfach und kostengünstig aufgebaut sein.

Anhand von Ausführungsbeispielen wird die Erfindung näher erläutert.

Es zeigt
- Figur 1: ein erstes Beispiel einer Winkelmeßeinrichtung mit einem Positioniermittel in einer ersten Montagestellung im Schnitt,
- Figur 2: die Winkelmeßeinrichtung gemäß Figur 1 in einer zweiten Montagestellung,
- Figur 3: die Winkelmeßeinrichtung gemäß Figur 1 in der Betriebsstellung,
- Figur 4: einen Querschnitt IV-IV der Winkelmeßeinrichtung gemäß Figur 3,
- Figur 5: einen Schnitt V-V der Winkelmeßeinrichtung gemäß Figur 1,
- Figur 6: ein weiteres Positioniermittel,
- Figur 7: ein pneumatisch angetriebenes Positioniermittel,
- Figur 8: ein zweites Beispiel einer Winkelmeßeinrichtung im Schnitt und
- Figur 9: ein drittes Beispiel einer Winkelmeßeinrichtung.

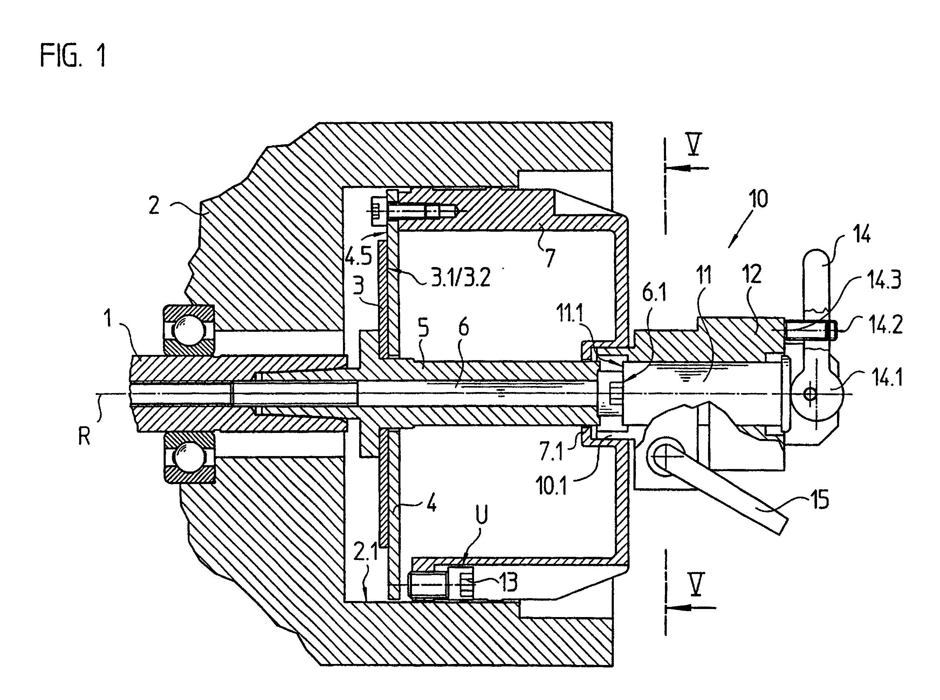

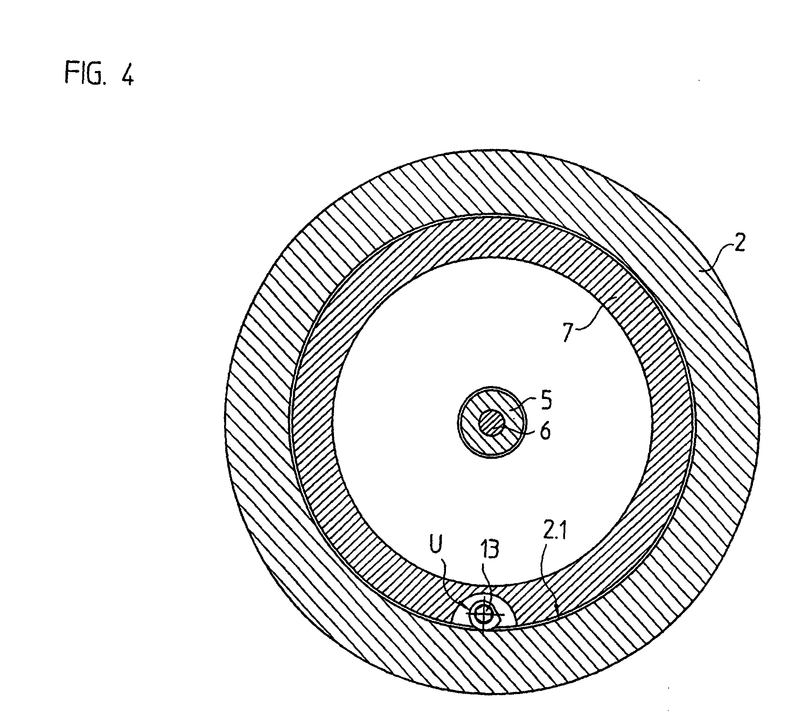

In den Figuren 1 bis 5 ist ein erstes Ausführungsbeispiel einer Winkelmeßeinrichtung zur Messung der Winkellage eines ersten Objektes 1 gegenüber einem zweiten Objekt 2 dargestellt. Das zweite Objekt ist beispielsweise ein stationärer Teil eines Motors, nachfolgend Stator 2 genannt. Das erste Objekt ist eine Welle 1 des Motors, deren Drehwinkel relativ zum Stator 2 gemessen werden soll. Hierzu wird an der Welle 1 eine Maßverkörperung in Form einer Teilscheibe 3 befestigt. Diese Befestigung erfolgt im Beispiel durch eine Schraube 6, sie kann aber auch durch Kleben, Pressen oder durch beliebige Klemmverfahren erfolgen. Die Teilscheibe 3 trägt auf einer Ebene 3.1 eine Teilung 3.2 bzw. eine Codierung, die lichtelektrisch, magnetisch, kapazitiv oder induktiv abtastbar ist.

Die Teilung 3.2 wird bei der Positionsmessung in an sich bekannter Weise von einem Abtastelement 4 abgetastet. Bei dieser Abtastung werden positionsabhängige elektrische Abtastsignale gewonnen, die einer Folgeelektronik zugeführt werden.
In Figur 1 ist eine erste Montagestellung der Winkelmeßeinrichtung dargestellt. Hierbei ist die Teilscheibe 3 an einer Nabe 5 und die Nabe 5 mittels der Schraube 6 an der Welle 1 drehsteif angekoppelt. Die Nabe 5 ist in diesem Beispiel gleichzeitig die Geberwelle. Nach dieser Ankopplung wird das Abtastelement 4 in eine erste Bezugsposition relativ zur Teilscheibe 3 gebracht. Diese erste Bezugsposition ist durch die Ebene 3.1 als axial wirkende Anschlagfläche der Teilscheibe 3 und durch eine damit zusammenwirkende axiale Anschlagfläche 4.5 des Abtastelementes 4 vorgegeben. Diese erste Bezugsposition kann auch durch andere axial wirkende Anschlagflächen zwischen der Rotor-Einheit oder axial dazu stationären Trägerteilen dieser Rotor-Einheit (Teilscheibe 3, Nabe 5, Schraube 6, Welle 1 oder zweites Objekt 2 als Trägerteil der Rotor-Einheit) und der Stator-Einheit (Abtastelement 4 oder Träger 7 des Abtastelementes 4) der Winkelmeßeinrichtung bestimmt sein.

In dieser Lage kommt ein Positioniermittel 10 zum Einstellen des Abtastabstandes D zum Einsatz. Es besteht aus zwei axial relativ zueinander bewegbaren Teilen 11 und 12. Durch die Verschiebung des Teiles 11 relativ zum Teil 12 wird das Teil 11 von einer ersten Bezugsstellung in eine zweite Bezugsstellung bewegt. Die beiden Bezugsstellungen und somit der Verschiebeweg ist durch die Konstruktion des Positioniermittels 10 vorgegeben. Wenn die beiden Teile 11 und 12 die erste Bezugsstellung zueinander aufweisen, wird das Positioniermittel 10 an die Winkelmeßeinrichtung herangeführt, und das erste Teil 11 mit einem Teil 3, 5, 6 der Rotor-Einheit in zumindest einer axialen Bewegungsrichtung fixiert sowie das zweite Teil 12 mit einem Teil 4, 7 der Stator-Einheit ebenfalls in zumindest einer axialen Bewegungsrichtung fixiert. Die axiale Fixierung des ersten Teils 11 erfolgt durch Kontakt einer in axialer Richtung wirkenden Anschlagfläche 11.1 des Teils 11 mit einer in axialer Richtung wirkenden Anschlagfläche 6.1 der Schraube 6. Die axiale Fixierung des zweiten Teils 12 erfolgt durch radiales Klemmen des Teils 12 mit dem Träger 7. Hierzu weist das Positioniermittel 10 eine ringförmige Aufnahme 10.1 auf, die mittels eines Aktors 15 aufspreizbar ist und an einer axial verlaufenden Fläche des Trägers 7 geklemmt wird.

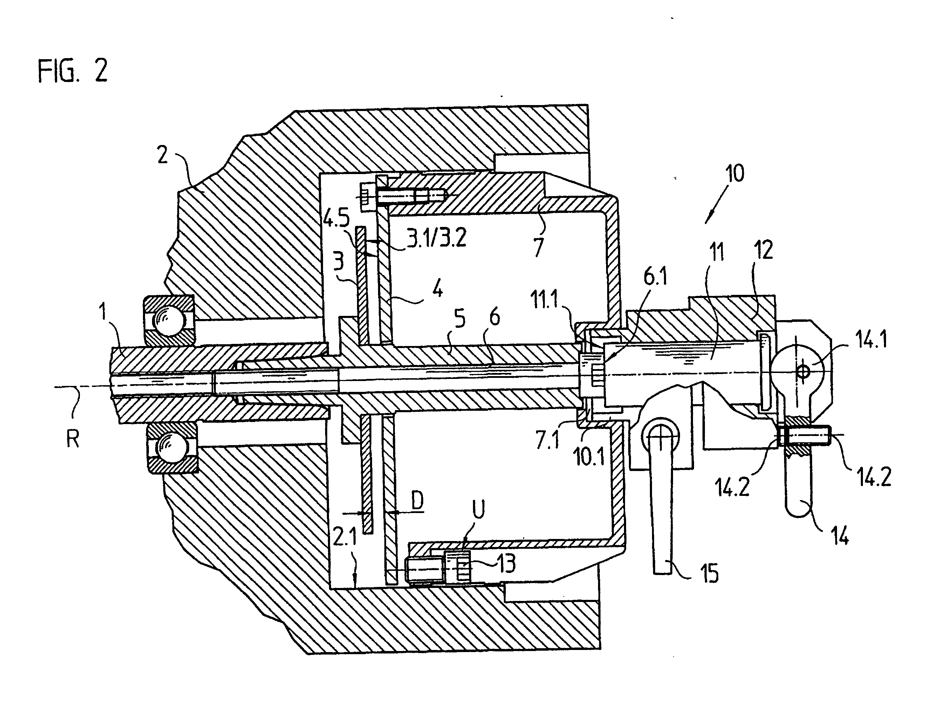

Nach der erfolgten Fixierung des Positioniermittels 10 wird eines der beiden Teile 11 relativ zum anderen Teil 12 in die zweite Bezugsstellung verschoben. Dabei stützt sich das erste Teil 11 an der Schraube 6 ab. Das Teil 11 kann sich aber auch an einem anderen Bereich der Rotor-Einheit 3, 5, 6 oder auch am zweiten Objekt 2 abstützen. Diese Verschiebung wird aufgrund der axialen Fixierung auf die Teilscheibe 3 und das Abtastelement 4 übertragen. Diese zweite Montagestellung ist in Figur 2 dargestellt.

Besonders vorteilhaft ist dabei, daß der Verschiebeweg ausschließlich durch das Positioniermittel 10 vorgegeben ist. Erreicht wird dies dadurch, daß zur axialen Fixierung zumindest eines der beiden Teile 11, 12 keine axial wirkende Anschlagfläche an der Winkelmeßeinrichtung vorgesehen ist, sondern die Fixierung durch radiale Klemmung erfolgt, indem beispielsweise das Teil 12 in einer Bohrung 7.1 des Trägers 7 radial aufgespreizt wird. Das Positioniermittel 10 bleibt somit wenigstens gegenüber dem Träger 7 axial frei positionierbar.

In nicht gezeigter Weise kann alternativ die Fixierung in axialer Richtung zwischen der Stator-Einheit 4, 7 und dem Teil 12 durch axial wirkende Anschlagflächen erfolgen, wobei das Teil 11 gegenüber einem Element 3, 5, 6 der Rotor-Einheit axial frei positionierbar ausgeführt ist und an einer axial verlaufenden Fläche der Nabe 5 in beliebiger axialer Position geklemmt werden kann.

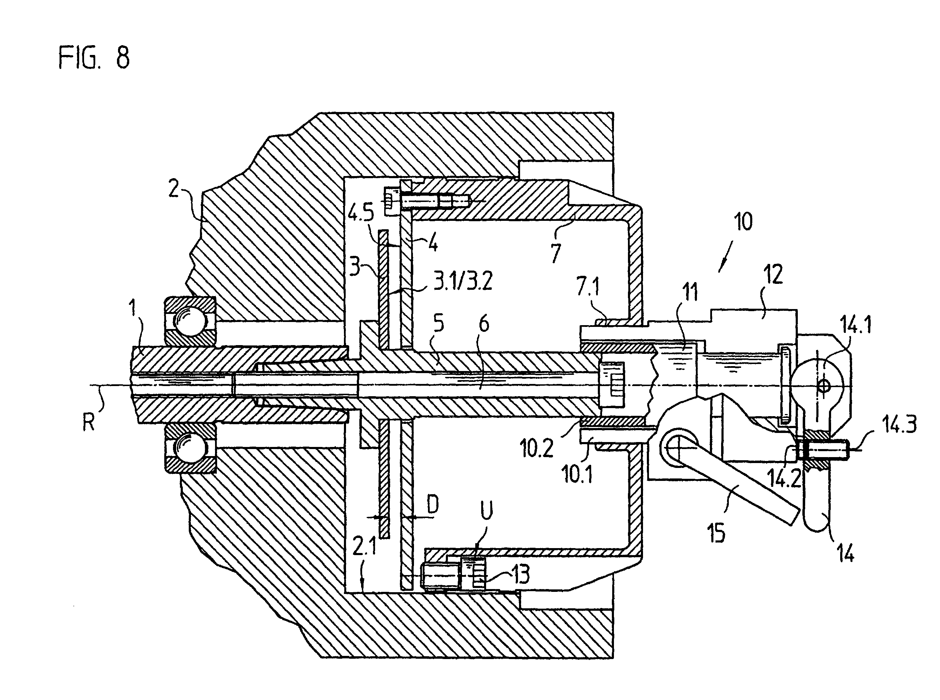

In Figur 8 ist eine weitere alternative Ausführung der Fixierung dargestellt. Zur axialen Fixierung sind keine axial wirkenden Anschlagflächen an der Winkelmeßeinrichtung vorgesehen, sondern es erfolgt die Fixierung des Teils 11 an einer axial verlaufenden Fläche der Nabe 5 und die Fixierung des Teils 12 ebenfalls an einer axial verlaufenden Fläche des Trägers 7 durch Klemmung. Die Aufnahme 10.1 des Teils 12 wird mittels dem Aktor 15 radial in der Bohrung 7.1 des Trägers 7 aufgespreizt. Das Teil 11 weist ebenfalls eine Aufnahme 10.2 auf, die mittels eines nicht dargestellten Aktors radial nach innen gespreizt wird und somit an der Außenfläche der Nabe 5 geklemmt wird. Die Aktoren 15 können als Hebel oder als Antiebe ausgeführt sein. Die Aufnahmen 10.1, 10.2 klemmen bevorzugt radial an mehren gegeneinander versetzten Stellen bzw. radial-symmetrisch.

In dem in Figur 2 dargestellten Zustand wird die Stator-Einheit 4, 7 der Winkelmeßeinrichtung mit dem Stator 2 des Motors verbunden. Diese Verbindung kann durch Schrauben oder Klemmen erfolgen. Besonders vorteilhaft ist die radiale Klemmung des Trägers 7 an einer Innenfläche 2.1 des Stators 2. Hierzu ist am Träger 7 zumindest ein Klemmelement in Form einer Exzenterschraube 13 vorgesehen. Der Kopf dieser Exzenterschraube 13 weist eine exzentrisch verlaufende Umfangsfläche U auf, die durch Verdrehen mit der Innenfläche 2.1 in Kontakt tritt und eine radiale Klemmkraft zwischen dem Träger 7 und dem Stator 2 hervorruft.

In nicht gezeigter Weise kann zur radialen Klemmung der Träger 7 auch geschlitzt ausgeführt sein, wobei in den Schlitz ein Spreizelement angreift, und eine Aufspreizung, also eine Vergrößerung des Durchmessers des Trägers 7 bewirkt. Weitere Beispiele zur radialen Klemmung sind in der EP 0 762 082 A1 beschrieben, worauf ausdrücklich Bezug genommen wird.

Besonders vorteilhaft ist die radiale Klemmung zwischen dem Stator 2 und dem Träger 7, wenn die Winkelmeßeinrichtung direkt in einem Tubus einer Antriebseinheit, insbesondere eines Elektromotors eingesetzt werden soll, da bei dieser Montage keine Befestigungsbohrungen am Motor erforderlich sind. In diesem Fall ist der Stator 2 das Gehäuse oder der Flansch bzw. das Motorlagerschild des Elektromotors.

Radiale Klemmung bedeutet eine Klemmung bzw. Spreizung in eine Richtung, die zumindest weitgehend senkrecht zur Drehachse R, also senkrecht zur axialen Richtung verläuft.

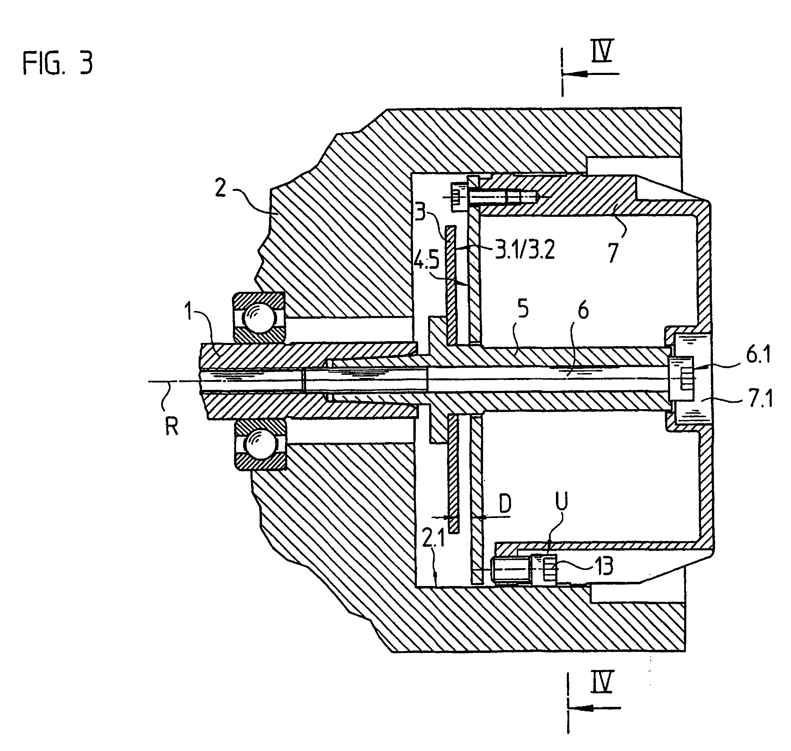

Nach erfolgter Befestigung der Stator-Einheit 4, 7 der Winkelmeßeinrichₜung am Stator 2 des Motors wird die Fixierung des Positioniermittels 10 an der Winkelmeßeinrichtung gelöst und das Positioniermittel 10 entfernt. Diese Betriebsstellung der fertig montierten Winkelmeßeinrichtung ist in Figur 3 gezeigt.

Nachfolgend werden einige Ausführungsbeispiele des Positioniermittels 10 genauer beschrieben. Bei dem in den Figuren 1, 2, 5 und 8 dargestellten Positioniermittel 10 wird die axiale Verschiebung durch Umlegen eines Hebels 14 realisiert. Bei dem Umlegen des Hebels 14 bewirkt die Kurvenscheibe 14.1 die Verschiebung des Teils 11 gegenüber dem Teil 12. Die den Verstellweg begrenzenden Bezugsstellungen sind durch beispielsweise einstellbare Anschläge 14.2, 14.3 vorgegeben. Die Aufnahme 10.1 ist ein geschlitzter Ringkörper, der mittels eines Hebels 15 aufspreizbar ist. Bei der Schnittdarstellung V-V ist aus Gründen der Übersichtlichkeit nur das Positioniermittet 10 dargestellt.

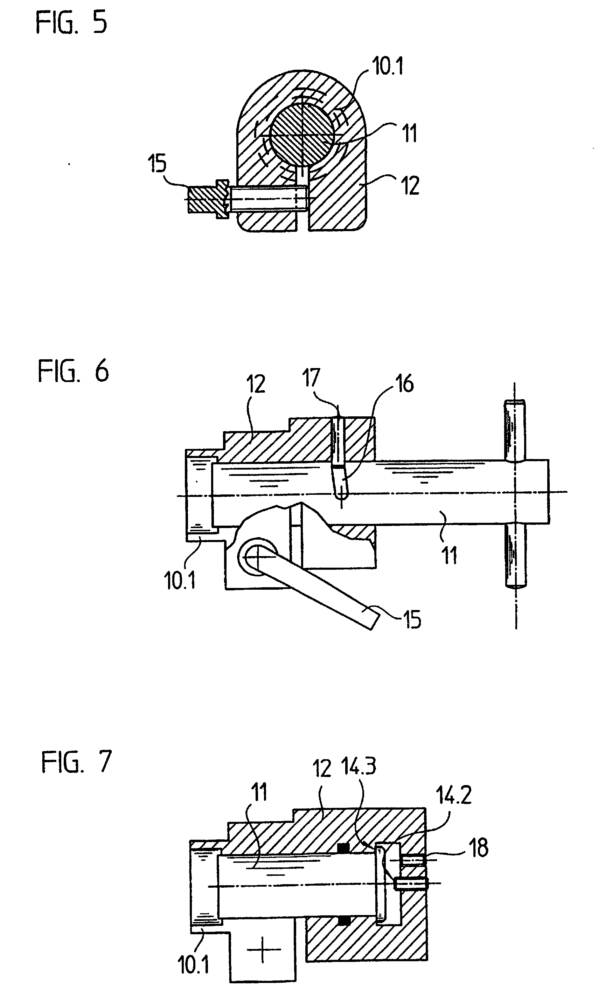

In Figur 6 ist ein weiteres Positioniermittel 10 dargestellt. Der Verstellweg wird durch eine schräge Nut 16 vorgegeben, in die ein Stift 17 eingreift. Durch gegenseitiges Verdrehen beider Teile 11, 12 um die Drehachse R werden die beiden Teile 11, 12 gegeneinander axial verschoben.

In Figur 7 ist ein Positioniermittel 10 mit einem pneumatischen Antrieb dargestellt. Hierzu wird das Teil 11 durch Luftdruck verschoben, indem ein Luftdruckanschluß 18 vorgesehen ist. Die Bezugsstellungen sind wiederum durch Anschläge 14.2, 14.3 vorgegeben.

Zur Verstellung des Teils 11 können auch andere Antriebe und Aktoren eingesetzt werden, wie beispielsweise Hubmagnete, Piezos, Hydraulikzylinder, Stellmotoren, Schrittmotoren. Damit läßt sich die Verstellung auch automatisieren.

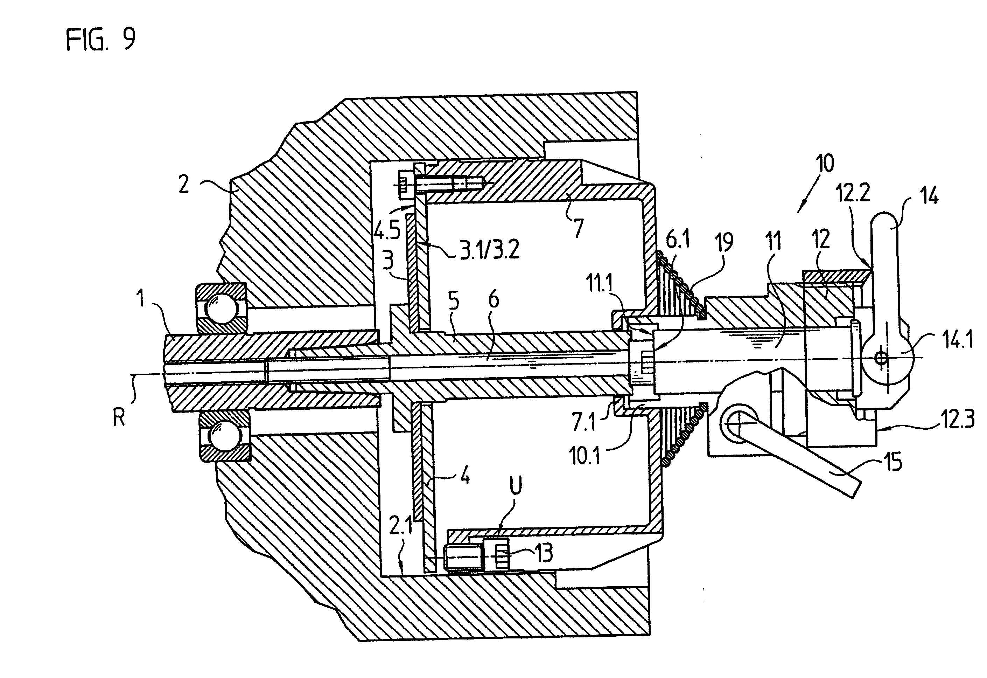

Das dritte Beispiel gemäß Figur 9 entspricht weitgehend dem ersten Beispiel gemäß Figur 1, so daß nachfolgend nur die Unterschiede demgegenüber beschrieben werden. Die Anschläge 14.2 und 14.3 zur Begrenzung des Verstellweges des Teils 11 sind bei diesem Beispiel durch Anschläge 12.2 und 12.3 ersetzt, die gemeinsam in Form einer auf das Teil 12 aufgeschobenen, vorzugsweise aufgeschraubten und fixierten Hülse realisiert sind. Der Verstellweg und somit die Bezugsstellungen des Teils 11 gegenüber dem Teil 12 sind durch die mit Flächen des Hebels 14 zusammenwirkenden Anschlagflächen 12.2, 12.3 der Hülse vorgegeben.

Um sicherzustellen, daß bei allen Anbaulagen der Träger 7 zum Zeitpunkt der Klemmung des Teils 12 mit dem Träger 7 definiert an der Teilscheibe 3 anliegt, ist zwischen dem Positioniermittel 10 und dem Träger 7 ein elastisches Andrückelement 19 vorgesehen. Dieses Andrückelement 19 stützt sich am Teil 12 ab und drängt die Anschlagfläche 4.5 definiert an die Anschlagfläche 3.1. Das axial wirkende elastische Andrückelement ist beispielsweise eine Kegelfeder 19, ein elastischer Zwischenring aus Kunststoff (O-Ring) oder eine Tellerfeder.

Bei den beschriebenen Beispielen erfolgt die Abtastung der Teilscheibe 3 nach dem induktiven Prinzip, dabei ist das Abtastelement 4 eine Platine, auf dessen Oberfläche Erreger- und Sensorwicklungen aufgebracht sind. Die Teilscheibe 3 besteht aus nichtleitendem Material und auf der Ebene 3.1 ist eine inkrementale Teilung 3.2 aus voneinander beabstandeten elektrisch leitenden Bereichen aufgebracht.

Anstelle der Platine 4 können auch andere induktive oder aber auch magnetfeldempfindliche, kapazitive oder lichtempfindliche Abtastelemente verwendet werden. Bei lichtelektrischen Positionsmeßeinrichtungen kann das Abtastelement auch nur eine an sich bekannte Abtastplatte (Schlitzblende) oder ein Hatbleitersubstrat mit mehreren lichtempfindlichen Bereichen sein.

Die Erfindung ist auch bei Längenmeßeinrichtungen einsetzbar.

## Patentansprüche

1. Verfahren zur Montage einer Positionsmeßeinrichtung, bei dem ein Abtastelement (4) an einem ersten Objekt (2) befestigt wird und eine eine Meßteilung (3.2) aufweisende Maßverkörperung (3) an einem weiteren Objekt (1) befestigt wird, wobei die Befestigung unter Einhaltung eines vorgegebenen Abtastabstandes (D) zwischen der Meßteilung (3.2) und dem Abtastelement (4) erfolgt, der durch folgende kennzeichnenden Verfahrensschritte eingestellt wird:
- das Abtastelement (4) wird relativ zur Maßverkörperung (3) in eine erste Bezugsposition gebracht,
- zwei in Richtung des Abtastabstandes (D) relativ zueinander bewegbare erste und zweite Teile (11, 12) eines Positioniermittels (10) werden relativ zueinander in eine erste Bezugsstellung gebracht,
- das erste Teil (11) wird mit der Maßverkörperung (3) oder einem Träger (1, 2, 5, 6) der Maßverkörperung (3) und das zweite Teil (12) mit dem Abtastelement (4) oder einem Träger (7) des Abtastelementes (4) in einer Bewegungsrichtung entlang des Abtastabstandes (D) fixiert,
- das erste Teil (11) wird relativ zum zweiten Teil (12) um einen vorgegebenen Weg in Richtung des Abtastabstandes (D) bewegt, wobei durch die axiale Fixierung das Abtastelement (4) relativ zur Maßverkörperung (3) in eine zweite Bezugsposition verschoben wird, in welcher der erforderliche Abtastabstand (D) vorliegt,
- das Abtastelement (4) wird in dieser Bezugsposition an dem ersten Objekt (2) befestigt
- die Fixierung des Positioniermittels (10) wird gelöst.

2. Verfahren nach Anspruch 1, **dadurch gekennzeichnet, daß**
- das Fixieren des ersten Teils (11) mit der Maßverkörperung (3) durch in Kontakt bringen einer quer zum Abtastabstand (D) verlaufenden Anschlagfläche (6.1) der Maßverkörperung (3) oder eines Trägers (1, 2, 5, 6) der Maßverkörperung (3) mit einer quer zum Abtastabstand (D) verlaufenden Anschlagfläche (11.1) des ersten Teils (11) erfolgt, und daß
- das Fixieren des zweiten Teils (12) mit dem Abtastelement (4) durch Klemmung des zweiten Teils (12) an einer in Richtung des Abtastabstandes (D) verlaufenden Fläche des Abtastelementes (4) oder eines Trägers (7) des Abtastelementes (4) erfolgt.

3. Verfahren nach Anspruch 1, **dadurch gekennzeichnet, daß**
- das Fixieren des ersten Teils (11) mit der Maßverkörperung (3) durch Klemmung des ersten Teils (11) an einer in Richtung des Abtastabstandes (D) verlaufenden Fläche der Maßverkörperung (3) oder eines Trägers (5, 6) der Maßverkörperung (3) erfolgt, und daß
- das Fixieren des zweiten Teils (12) mit dem Abtastelement (4) durch in Kontakt bringen einer quer zum Abtastabstand (D) verlaufenden Anschlagfläche des Abtastelementes (4) oder eines Trägers (7) des Abtastelementes (4) mit einer quer zum Abtastabstand (D) verlaufenden Anschlagfläche des zweiten Teils (12) erfolgt.

4. Verfahren nach Anspruch 1, **dadurch gekennzeichnet, daß**
- das Fixieren des ersten Teils (11) mit der Maßverkörperung (3) durch Klemmung des ersten Teils (11) an einer in Richtung des Abtastabstandes (D) verlaufenden Fläche der Maßverkörperung (3) oder eines Trägers (5, 6) der Maßverkörperung (3) erfolgt, und daß
- das Fixieren des zweiten Teils (12) mit dem Abtastelement (4) durch Klemmung des zweiten Teils (12) an einer in Richtung des Abtastabstandes (D) verlaufenden Fläche des Abtastelementes (4) oder eines Trägers (7) des Abastelementes (4) erfolgt.

5. Verfahren nach Anspruch 1, wobei die Positionsmeßeinrichtung eine Winkelmeßeinrichtung mit einer Teilscheibe (3) als Maßverkörperung ist, **gekennzeichnet durch** folgende Verfahrensschritte:
- drehstarre Kopplung der Teilscheibe (3) einer Rotor-Einheit (3, 5, 6) mit dem einen Objekt (1),
- Positionieren des Abtastelementes (4) einer Stator-Einheit (4, 7) relativ zur Teilscheibe (3) in der ersten Bezugsposition, wobei diese erste Bezugsposition **durch** das Zusammenwirken einer quer zum Abtastabstand (D) verlaufenden Anschlagfläche (3.1) der Rotor-Einheit (3, 5, 6) und einer dazu korrespondierenden Anschlagfläche (4.5) der Stator-Einheit (4, 7) definiert ist,
- Fixieren des ersten Teils (11) des Positioniermittels (10) mit der Rotor-Einheit (3, 5, 6) **durch** in Kontakt bringen einer quer zum Abtastabstand (D) verlaufenden Anschlagfläche (6.1) der Rotor-Einheit (3, 5, 6) mit einer quer zum Abtastabstand (D) verlaufenden Anschlagfläche (11.1) des ersten Teils (11),
- Fixieren des zweiten Teils (12) des Positioniermittels (10) mit der Stator-Einheit (4, 7) **durch** Klemmung des zweiten Teils (12) an einer in Richtung des Abtastabstandes (D) verlaufenden Fläche der Stator-Einheit (4, 7),
- Verschieben des ersten Teils (11) relativ zum zweiten Teil (12) des Positioniermittels (10),
- drehstarre Kopplung der Stator-Einheit (4, 7) mit dem weiteren Objekt (2),
- Lösen der Fixierung und Entfernen des Positioniermittels (10) von der Winkelmeßeinrichtung,

6. Verfahren nach einem der Ansprüche 1 bis 5, **dadurch gekennzeichnet, daß** die Relativbewegung des ersten Teils (11) gegenüber dem zweiten Teil (12) des Positioniermittels (10) durch einen Antrieb, insbesondere einen Piezo-, Hydraulik-, Pneumatik- oder Elektromotor-Antrieb erfolgt.

7. Verfahren nach einem der Ansprüche 1 bis 6, **dadurch gekennzeichnet, daß** die Befestigung des Abtastelementes (4) am ersten Objekt (2) durch radiale Klemmung an einer in Richtung des Abtastabstandes (D) verlaufenden Fläche (2.1) des ersten Objektes (2) erfolgt.

8. Verfahren nach einem der vorhergehenden Ansprüche, **dadurch gekennzeichnet, daß** das Abtastelement (4) in die erste Bezugsposition durch ein in Richtung des Abtastabstandes (D) kraftausübendes elastisches Andrückelement (19) gedrängt wird, das sich am Positioniermittel (10) abstützt.

9. Positioniermittel zur Einstellung des Abtastabstandes (D) zwischen einem Abtastelement (4) und einer Maßverkörperung (3) einer Positionsmeßeinrichtung, **dadurch gekennzeichnet, daß**
- es aus zwei in Richtung des Abtastabstandes (D) relativ zueinander verschiebbarer Teile (11, 12) besteht, und der Verschiebeweg begrenzt ist,
- eines der beiden Teile (11, 12) zumindest in einer Bewegungsrichtung entlang des Abtastabstandes (D) mit der Maßverkörperung (3) oder einem Träger (1, 2, 5, 6) der Maßverkörperung (3) fixierbar ist,
- das andere der beiden Teile (12, 11) zumindest in einer Bewegungsrichtung entlang des Abtastabstandes (D) mit dem Abtastelement (4) oder einem Träger (7) des Abtastelementes (4) fixierbar ist, und
- zumindest eines der beiden Teile (11, 12) zur Fixierung eine Aufnahme (10.1) aufweist, mit der es an einer in Richtung des Abtastabstandes (D) verlaufenden Fläche der Maßverkörperung (3) oder einem Träger (1, 2, 5, 6) der Maßverkörperung (3) oder des Abtastelementes (4) oder eines Trägers (7) des Abtastelementes (4) klemmbar ist.

10. Positioniermittel nach Anspruch 9, **dadurch gekennzeichnet, daß** eines der beiden Teile (11, 12) eine quer zum Abtastabstand (D) verlaufende Anschtagfiäche (11.1, 12.5) zur Abstützung und Fixierung gegenüber einer Anschlagfläche (6.1, 7.5) der Maßverkörperung (3) oder eines Trägers (1, 2, 5, 6) der Maßverkörperung (3) oder des Abtastelementes (49 oder eines Trägers (7) des Abtastelementes (4) aufweist.

11. Positioniermittel nach Anspruch 9 oder 10, **dadurch gekennzeichnet, daß** die Aufnahme (10.1) eine quer zur Verschieberichtung bewegbare Klemmfläche aufweist.

12. Positioniermittel nach Anspruch 11, **dadurch gekennzeichnet, daß** die Klemmfläche von einem aufspreizbaren Ring gebildet ist.

13. Positioniermittel nach einem der Ansprüche 9 bis 12, **dadurch gekennzeichnet, daß** der Verschiebeweg zur Einstellung des Abtastabstandes (D) durch Anschlagflächen des Positioniermittels (10) begrenzt ist.

14. Positioniermittel nach einem der Ansprüche 9 bis 13, **dadurch gekennzeichnet, daß** am Positioniermittel (10) ein elastisches Andrückelement (19) vorgesehen ist, mit dem eine in Richtung des Abtastabstandes (D) wirkende Andruckkraft auf das Abtastelement (4) oder einen Träger (7) des Abtastelementes (4) ausübbar ist.

## Claims

1. Method for assembling a position measuring device, in which a scanning element (4) is attached to a first object (2), and a material measure (3) having a measurement graduation (3.2) is attached to a further object (1), the attachment being effected while maintaining a prescribed scanning spacing (D) between the measurement graduation (3.2) and the scanning element (4), which scanning spacing is adjusted by means of the following characterising method steps:
- the scanning element (4) is brought into a first reference position relative to the material measure (3),
- two first and second parts (11, 12) of a positioning means (10), which are movable relative to each other in the direction of the scanning spacing (D), are brought into a first reference position relative to each other,
- the first part (11) is fixed to the material measure (3) or to a carrier (1, 2, 5, 6) of the material measure (3) and the second part (12) is fixed to the scanning element (4) or to a carrier (7) of the scanning element (4) in a movement direction along the scanning spacing (D),
- the first part (11) is moved relative to the second part (12) by a prescribed route in the direction of the scanning spacing (D), the scanning element (4) being displaced as a result of the axial fixing into a second reference position relative to the material measure (3), in which second reference position the required scanning spacing (D) is present,
- the scanning element (4) is attached in this reference position to the first object (2),
- the fixing of the positioning means (10) is released.

2. Method according to claim 1, **characterised in that**
- the fixing of the first part (11) to the material measure (3) is effected by bringing a stop face (6.1) of the material measure (3) or of a carrier (1, 2, 5, 6) of the material measure (3), which stop face extends transversely to the scanning spacing (D), into contact with a stop face (11.1) of the first part (11), which stop face extends transversely to the scanning spacing (D), and **in that**
- the fixing of the second part (12) to the scanning element (4) is effected by clamping the second part (12) to a face of the scanning element (4) or of a carrier (7) of the scanning element (4), which face extends in the direction of the scanning spacing (D).

3. Method according to claim 1, **characterised in that**
- the fixing of the first part (11) to the material measure (3) is effected by clamping the first part (11) to a face of the material measure (3) or of a carrier (5, 6) of the material measure (3), which face extends in the direction of the scanning spacing (D), and **in that**
- the fixing of the second part (12) to the scanning element (4) is effected by bringing a stop face of the scanning element (4) or of a carrier (7) of the scanning element (4), which stop face extends transversely to the scanning spacing (D), into contact with a stop face of the second part (12), which stop face extends transversely to the scanning spacing (D).

4. Method according to claim 1, **characterised in that**
- the fixing of the first part (11) to the material measure (3) is effected by clamping the first part (11) to a face of the material measure (3) or of a carrier (5, 6) of the material measure (3), which face extends in the direction of the scanning spacing (D), and **in that**
- the fixing of the second part (12) to the scanning element (4) is effected by clamping the second part (12) to a face of the scanning element (4) or of a carrier (7) of the scanning element (4), which face extends in the direction of the scanning spacing (D).

5. Method according to claim 1, the position measuring device being an angle measuring device having a dividing disc (3) as material measure, **characterised by** the following method steps:
- non-rotatable coupling of the dividing disc (3) of a rotor unit (3, 5, 6) to the one object (1),
- positioning of the scanning element (4) of a stator unit (4, 7) relative to the dividing disc (3) in the first reference position, this first reference position being defined by means of the cooperation of a stop face (3.1) of the rotor unit (3, 5, 6), which stop face extends transversely to the scanning spacing (D), and a stop face (4.5), which corresponds thereto, of the stator unit (4, 7),
- fixing of the first part (11) of the positioning means (10) to the rotor unit (3, 5, 6) by bringing a stop face (6.1) of the rotor unit (3, 5, 6), which stop face extends transversely to the scanning spacing (D), into contact with a stop face (11.1) of the first part (11), which stop face extends transversely to the scanning spacing (D),
- fixing of the second part (12) of the positioning means (10) to the stator unit (4, 7) by clamping the second part (12) to a face ofthe stator unit (4, 7), which face extends in the direction of the scanning spacing (D),
- displacing of the first part (11) relative to the second part (12) of the positioning means (10),
- non-rotatable coupling of the stator unit (4, 7) to the further object (2),
- releasing of the fixing and removing of the positioning means (10) from the angle measuring device.

6. Method according to one of the claims 1 to 5, **characterised in that** the relative movement of the first part (11) relative to the second part (12) of the positioning means (10) is effected by means of a drive, in particular a piezoelectric-, hydraulic-, pneumatic- or electromotor-drive.

7. Method according to one of the claims 1 to 6, **characterised in that** the attachment of the scanning element (4) to the first object (2) is effected by means of radial clamping to a face (2.1) of the first object (2), which face extends in the direction of the scanning spacing (D).

8. Method according to one of the preceding claims, **characterised in that** the scanning element (4) is forced into the first reference position by an elastic pressing element (19) exerting a force in the direction of the scanning spacing (D), which element is supported on the positioning means (10).

9. Positioning means for adjusting the scanning spacing (D) between a scanning element (4) and a material measure (3) of a position measuring device, **characterised in that**
- it comprises two parts (11, 12) which are displaceable relative to each other in the direction of the scanning spacing (D), and the displacement route is delimited,
- one of the two parts (11, 12) can be fixed to the material measure (3) or to a carrier (1, 2, 5, 6) of the material measure (3), at least in a movement direction along the scanning spacing (D),
- the other of the two parts (12, 11) can be fixed to the scanning element (4) or to a carrier (7) of the scanning element (4), at least in a movement direction along the scanning spacing (D), and
- at least one of the two parts (11, 12) has a receiving means (10.1) for fixing, with which it can be clamped to a face of the material measure (3), which face extends in the direction of the scanning spacing (D), or to a carrier (1, 2, 5, 6) of the material measure (3) or of the scanning element (4) or of a carrier (7) of the scanning element (4).

10. Positioning means according to claim 9, **characterised in that** one of the two parts (11, 12) has a stop face (11.1, 12.5) which extends transversely to the scanning spacing (D), for supporting and fixing with respect to one stop face (6.1, 7.5) of the material measure (3) or of a carrier (1, 2, 5, 6) of the material measure (3) or of the scanning element (49) or of a carrier (7) of the scanning element (4).

11. Positioning means according to claim 9 or 10, **characterised in that** the receiving means (10.1) has a clamping face which is movable transversely to the displacement direction.

12. Positioning means according to claim 11, **characterised in that** the clamping face is formed from an expandable ring.

13. Positioning means according to one of the claims 9 to 12, **characterised in that** the displacement route for adjustment of the scanning spacing (D) is delimited by stop faces of the positioning means (10).

14. Positioning means according to one of the claims 9 to 13, **characterised in that** an elastic pressing element (19) is provided on the positioning means (10), with which a pressing force acting in the direction of the scanning spacing (D) can be exerted upon the scanning element (4) or upon a carrier (7) of the scanning element (4).

## Revendications

1. Procédé de montage d'un dispositif de mesure de position, dans lequel un élément de palpage (4) est fixé à un premier objet (2) et une mesure matérialisée (3) portant une division de mesure (3.2) est fixée à un autre objet (1), la fixation étant réalisée en respectant, entre la division de mesure (3.2) et l'élément de palpage (4), une distance de palpage (D) prédéterminée, qui est réglée grâce aux étapes de procédé caractéristiques suivantes
• on amène l'élément de palpage (4) dans une première position de référence par rapport à la mesure matérialisée (3),
• on amène dans une première position de référence l'un vis-à-vis de l'autre, des premier et deuxième éléments (11, 12) d'un moyen de positionnement (10), mobiles l'un par rapport à l'autre dans la direction de la distance de palpage(D),
• on lie le premier élément (11) à la mesure matérialisée (3) ou à un support (1, 2, 5, 6) de la mesure matérialisée (3) et le deuxième élément (12) à l'élément de palpage (4) ou à un support (7) de l'élément de palpage (4) dans une direction de déplacement le long de la distance de palpage (D),
• on déplace le premier élément (11) d'une course prédéterminée dans la direction de la distance de palpage (D) par rapport au deuxième élément (12), opération au cours de laquelle, du fait de la liaison axiale, l'élément de palpage est déplacé dans une deuxième position de référence par rapport à la mesure matérialisée (3), dans laquelle la distance de palpage (D) nécessaire est garantie,
• on fixe l'élément de palpage (4) dans cette position de référence au premier objet (2), on libère la liaison du moyen de positionnement (10).

2. Procédé selon la revendication 1, **caractérisé**
• **en ce que** la liaison entre premier élément (11) et la mesure matérialisée (3) est réalisée en amenant en contact une surface de butée (6.1) de la mesure matérialisée (3) ou d'un support (1, 2, 5, 6) de la mesure matérialisée (3), qui s'étend transversalement à la distance de palpage (D), avec une surface de butée (11.1) du premier élément (11), qui s'étend transversalement à la distance de palpage (D), et
• **en ce que** la liaison du deuxième élément (12) à l'élément de palpage (4) est réalisée par serrage du deuxième élément (12) sur une surface de l'élément de palpage (4) ou d'un support (7) de l'élément de palpage (4), qui s'étend dans la direction de la distance de palpage (D).

3. Procédé selon la revendication 1, **caractérisé**
• **en ce que** la liaison du premier élément (11) à la mesure matérialisée (3) est obtenue par serrage dudit premier élément (11) sur une surface de la mesure matérialisée (3) ou d'un support (5, 6) de la mesure matérialisée (3), qui s'étend dans la direction de la distance de palpage (D), et
• **en ce que** la liaison du deuxième élément (12) à l'élément de palpage (4) est réalisée en amenant en contact une surface de butée de l'élément de palpage (4) ou d'un support (7) de l'élément de palpage (4), qui s'étend transversalement à la distance de palpage (D), avec une surface de butée du deuxième élément (12), qui s'étend transversalement à la distance de palpage (D).

4. Procédé selon la revendication 1, **caractérisé**
• **en ce que** la liaison du premier élément (11) à la mesure matérialisée (3) est réalisée par serrage du premier élément (11) sur une surface de la mesure matérialisée (3) ou d'un support (5, 6) de la mesure matérialisée (3), qui s'étend dans la direction de la distance de palpage (D), et
• **en ce que** la liaison du deuxième élément (12) à l'élément de palpage (4) est réalisée par serrage du deuxième élément (12) sur une surface de l'élément de palpage (4) ou d'un support (7) de l'élément de palpage (4), qui s'étend dans la direction de la distance de palpage (D).

5. Procédé selon la revendication 1, le dispositif de mesure de position étant un dispositif de mesure d'angles avec un disque gradué (3) comme mesure matérialisée, **caractérisé par** les étapes de procédé suivantes :
• réalisation d'une liaison rigide en rotation entre le disque gradué (3) d'une unité rotor (3, 5, 6) et l'un des objets (1),
• positionnement de l'élément de palpage (4) d'une unité stator (4, 7) par rapport au disque gradué (3) dans la première position de référence, cette première position de référence étant définie par la coopération d'une surface de butée (3.1) de l'unité rotor (3, 5, 6), qui s'étend transversalement à la distance de palpage (D) avec une surface de butée (4.5) associée de l'unité stator (4, 7),
• liaison du premier élément (11) du moyen de positionnement (10) à l'unité rotor (3, 5, 6) en amenant en contact une surface de butée (6.1) de l'unité rotor (3, 5, 6), qui s'étend transversalement à la distance de palpage (D) avec une surface de butée (11.1) du premier élément (11) qui s'étend transversalement à la distance de palpage (D),
• liaison du deuxième élément (12) du moyen de positionnement (10) à l'unité stator (4, 7) par serrage du deuxième élément (12) sur une surface de l'unité stator (4, 7) qui s'étend dans la direction de la distance palpage (D),
• déplacement du premier élément (11) par rapport au deuxième élément (12) du moyen de positionnement (10),
• couplage rigide en rotation de l'unité stator (4, 7) à l'autre objet (2)
• libération de la liaison et retrait du moyen de positionnement (10) du dispositif de mesure d'angles.

6. Procédé selon une des revendications 1 à 5, **caractérisé en ce que** le mouvement relatif du premier élément (11) par rapport au deuxième élément (12) du moyen de positionnement (10) est obtenu à l'aide d'un moyen d'entraînement, en particulier à l'aide d'un moteur piézo, d'un moteur hydraulique, d'un moteur pneumatique ou d'un moteur électrique.

7. Procédé selon une des revendications 1 à 6, **caractérisé en ce que** la fixation de l'élément de palpage (4) au premier objet (2) est réalisée par serrage radial sur une surface (2.1) du premier objet (2), qui s'étend dans la direction de la distance de palpage (D).

8. Procédé selon une des revendications précédentes, **caractérisé en ce que** l'élément de palpage (4) est repoussé dans la première position de référence par un organe de poussée (19) élastique qui agit dans la direction de la distance de palpage (D) et prend appui sur le moyen de positionnement (10).

9. Moyen de positionnement pour le réglage de la distance de palpage (D) entre un élément de palpage (4) et une mesure matérialisée (3) d'un dispositif de mesure de position, **caractérisé**
• **en ce qu'**il est formé de deux éléments (11, 12) pouvant se déplacer l'un par rapport à l'autre dans la direction de la distance de palpage (D), et que la course de déplacement est limitée,
• **en ce qu'**un des deux éléments (11, 12), dans au moins une direction de déplacement le long de la distance de palpage (D), peut être lié à la mesure matérialisée (3) ou à un support (1, 2, 5, 6) de la mesure matérialisée (3),
• **en ce que** l'autre des deux éléments (11, 12), dans au moins une direction de déplacement le long de la distance de palpage (D), peut être lié à l'élément de palpage (4) ou à un support (7) de l'élément de palpage (4),
• **en ce qu'**au moins un des deux éléments de palpage (11, 12), à des fins de liaison, présente un logement (10.1) grâce auquel il peut être fixé à une surface de la mesure matérialisée (3) ou à un support (1, 2, 5, 6) de la mesure matérialisée (3), ou à une surface de l'élément de palpage (4) ou d'un support (7) de l'élément de palpage (4), qui s'étend dans la direction de la distance de palpage (D).

10. Moyen de positionnement selon la revendication 9, **caractérisé en ce qu'**un des éléments (11, 12) présente une surface de butée (11.1, 12.5) qui s'étend transversalement à la distance de palpage (D) à des fins d'appui et de liaison par rapport à une surface de butée (6.1, 7.5) de la mesure matérialisée (3) ou d'un support (1, 2, 5, 6) de la mesure matérialisée (3), ou de l'élément de palpage (4) ou d'un support (7) de l'élément de palpage (4).

11. Moyen de positionnement selon la revendication 9 ou 10, **caractérisé en ce que** le logement (10.1) présente une surface de serrage mobile transversalement à la direction de déplacement.

12. Moyen de positionnement selon la revendication 11, **caractérisé en ce que** la surface de serrage est formée d'une bague expansible.

13. Moyen de positionnement selon une des revendications 9 à 12, **caractérisé en ce que** la course de déplacement pour le réglage de la distance de palpage (D) est limitée par des surfaces de butée de l'élément de positionnement (10).

14. Moyen de positionnement selon une des revendications 9 à 13, **caractérisé en ce qu'**il est prévu sur le moyen de positionnement (10), un élément de poussée (19) élastique, grâce auquel une force de poussée qui agit dans la direction de la distance de palpage (D) peut être exercée sur l'élément de palpage (4) ou sur un support (7) de l'élément de palpage (4).
